# FASCICULE DE BREVET EUROPEEN

(11) **EP 2 839 524 B1**
(45) Date de publication et mention de la délivrance du brevet: **06.04.2016**
(21) Numéro de dépôt: 13723831.7
(22) Date de dépôt: 16.04.2013
(51) Int. Cl.: H01M 2/10, B62D 25/00, B60K 1/04, B60K 6/405, B62D 21/15

(54) **ÉLÉMENTS DE RENFORCEMENT CONTRE DES EFFORTS EXTÉRIEURS POUR UNE BATTERIE D'ALIMENTATION DE PUISSANCE**
ELEMENTE ZUR VERSTÄRKUNG GEGEN ÄUSSERE SPANNUNGEN FÜR EINE STROMVERSORGUNGSBATTERIE
ELEMENTS FOR REINFORCEMENT AGAINST EXTERNAL STRESSES FOR A POWER SUPPLY BATTERY

(30) Priorité: 17.04.2012 FR 1253526
(43) Date de publication de la demande: 25.02.2015
(73) Titulaire: Renault S.A.S., 92100 Boulogne-Billancourt (FR)
(72) Inventeur: LE JAOUEN, Guillaume, F-78180 Montigny Le Bretonneux (FR); KERGUELEN, Yannick, F-91410 Dourdan (FR); FERRON, Thierry, F-78340 Les Clayes (FR); NGUYEN, Luan, F-91120 Palaiseau (FR)
(86) Numéro de dépôt international: PCT/FR2013/050837
(87) Numéro de publication internationale: WO 2013/156732

(56) Documents cités:
- EP-A1- 2 070 754
- WO-A1-2011/061571
- DE-A1-102010 013 022
- DE-A1-102011 102 412

## Description

### Domaine technique de l'invention

L'invention concerne le domaine de la structure de véhicules à motorisation électrique ou hybride.

L'invention a pour objet plus particulièrement un agencement pour un véhicule automobile à motorisation électrique ou hybride, comprenant une batterie d'alimentation de puissance et des éléments de renforcement indépendants de la batterie et configurés pour protéger la batterie contre des efforts extérieurs appliqués au véhicule selon une direction longitudinale et/ou une direction transversale du véhicule notamment en cas de choc.

Elle concerne aussi un véhicule automobile à motorisation électrique ou hybride, qui comprend un tel agencement, ainsi qu'un procédé de montage d'une batterie de puissance d'un véhicule automobile à motorisation électrique ou hybride, sur un châssis du véhicule.

### État de la technique

L'architecture des véhicules à traction électrique ou hybride est souvent spécifique. La batterie d'alimentation de puissance n'est pas forcément implantée à l'emplacement du réservoir d'un véhicule thermique classique. Son positionnement sur la partie centrale de la structure du véhicule la rend vulnérable, notamment au choc latéral par un objet tel qu'un poteau.

D'autre part, la partie centrale de la structure peut parfois être constituée d'une ou plusieurs coque(s) autoporteuse(s) à base par exemple de fibres de carbone, non capacitaire(s) pour protéger le boîtier de fermeture de la batterie souvent formé dans un matériau fragile tel qu'une pièce en aluminium par exemple obtenue par un procédé de fonderie.

Une solution connue consiste à disposer la batterie d'alimentation de puissance au niveau des trains arrière ou avant du véhicule (en général, en lieu et place du réservoir de carburant d'un véhicule thermique). Ce positionnement permet de bénéficier de la raideur transversale des trains et d'assurer l'intégrité de la batterie lors d'un choc.

Toutefois, une telle organisation n'est pas toujours envisageable, notamment suivant les contraintes de conception de la propulsion dans la zone arrière. Dès lors, la batterie est souvent implantée en partie centrale de la structure : son encombrement transversal génère alors une proximité avec les bords latéraux du véhicule qui est susceptible de générer de grandes déformations de la batterie et de provoquer un risque d'électrocution et/ou d'incendie.

C'est pourquoi, dans le contexte des véhicules électrique ou hybride et dans un souci de sécurité générale, il existe un besoin de fournir une solution permettant d'assurer l'intégrité de la batterie d'alimentation de puissance de traction dans différentes configurations de choc (choc frontal, choc arrière et choc latéral de type poteau) même dans le cas d'une implantation en partie centrale du véhicule et/ou dans le cas d'utilisation de coques autoporteuses, pour minimiser tout risque de contact entre des éléments internes de la batterie lors du choc et éviter toute électrocution et/ou tout court-circuit susceptible de générer un incendie lors du choc ou consécutif à celui-ci.

Les documents WO2011/061571, EP1950070B1 et EP2070754 décrivent des solutions mettant en oeuvre des éléments de renforcement solidaires à demeure de la batterie, ce qui peut s'avérer gênant dans la manipulation, la fabrication et le stockage des batteries.

Le document EP2070754 A1 montre les caractéristiques du préambule des revendications indépendantes.

### Objet de l'invention

Le but de la présente invention est de proposer une solution qui remédie aux inconvénients listés ci-dessus et qui réponde aux objectifs généraux précités.

Un premier aspect de l'invention concerne un agencement pour un véhicule automobile à motorisation électrique ou hybride, comprenant une batterie d'alimentation de puissance et des éléments de renforcement indépendants de la batterie et configurés pour protéger la batterie contre des efforts extérieurs appliqués au véhicule selon une direction longitudinale et/ou une direction transversale du véhicule notamment en cas de choc. L'agencement comprend des premiers éléments structurels d'un châssis du véhicule et l'ensemble est configuré de sorte que les premiers éléments structurels sont pris en sandwich entre la batterie et les éléments de renforcement, notamment suivant une direction verticale.

L'agencement peut aussi comprendre des éléments de fixation assurant une fixation amovible de la batterie sur les éléments de renforcement. Les éléments de fixation peuvent être configurés pour exercer un effort de rapprochement de la batterie en direction des éléments de renforcement en enserrant les premiers éléments structurels entre la batterie et les éléments de renforcement sous l'action dudit effort de rapprochement.

Les premiers éléments structurels de châssis peuvent être constitués par au moins une coque autoporteuse, notamment réalisée en matériau composite à base de fibres de carbone, agencée au moins dans une partie centrale d'un soubassement du véhicule suivant la direction longitudinale.

L'agencement peut comprendre des deuxièmes éléments structurels du châssis du véhicule, distincts des premiers éléments structurels, les éléments de renforcement étant solidaires des deuxièmes éléments structurels, notamment par vissage.

Les deuxièmes éléments structurels de châssis peuvent comprendre une ossature agencée au moins dans une partie avant du soubassement du véhicule suivant la direction longitudinale du véhicule et se prolongeant au niveau de la partie centrale du soubassement par les éléments de renforcement.

Les éléments de renforcement peuvent être rapportés par le dessus sur les premiers éléments structurels.

Les éléments de renforcement peuvent être fixés aux premiers éléments structurels, notamment par collage, de sorte que les éléments de renforcement assurent une rigidification des premiers éléments structurels, notamment pour des cas de charges en flexion et/ou en torsion appliquées au châssis.

Les éléments de renforcement peuvent comprendre des profilés longitudinaux et des profilés transversaux, notamment en matériau métallique tel qu'un acier, en extrudé aluminium ou un alliage d'aluminium, et assemblés entre eux, notamment par mécano-soudage, pour former un cadre encadrant la batterie dans un plan donné, notamment dans un plan horizontal.

Un deuxième aspect de l'invention concerne un véhicule automobile à motorisation électrique ou hybride, qui comprend un tel agencement.

Un troisième aspect de l'invention concerne un procédé de montage d'une batterie d'alimentation de puissance d'un véhicule automobile à motorisation électrique ou hybride, sur un châssis du véhicule, comprenant les étapes suivantes :
- fournir la batterie et des éléments de renforcement indépendants de la batterie, notamment indépendants d'un boîtier de fermeture de la batterie, configurés pour protéger la batterie, à l'issue de l'étape suivante, contre des efforts extérieurs appliqués au véhicule selon une direction longitudinale et/ou une direction transversale du véhicule notamment en cas de choc,
- fixer la batterie sur les éléments de renforcement en prenant en sandwich et en enserrant des premiers éléments structurels de châssis du véhicule entre la batterie et les éléments de renforcement.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 est une vue de dessous d'un véhicule automobile équipé d'un exemple d'agencement selon l'invention,
- la figure 2 est une vue de dessus des éléments de renforcement utilisés,
- la figure 3 est une vue de dessous des éléments de renforcement et de la batterie utilisés,
- la figure 4 est une vue de dessous de l'agencement, suite à un choc latéral extérieur de type poteau,
- les figures 5 et 6 sont des coupes transversales locales de l'agencement, en bord de batterie, respectivement avant et après le choc représenté en figure 4.

### Description de modes préférentiels de l'invention

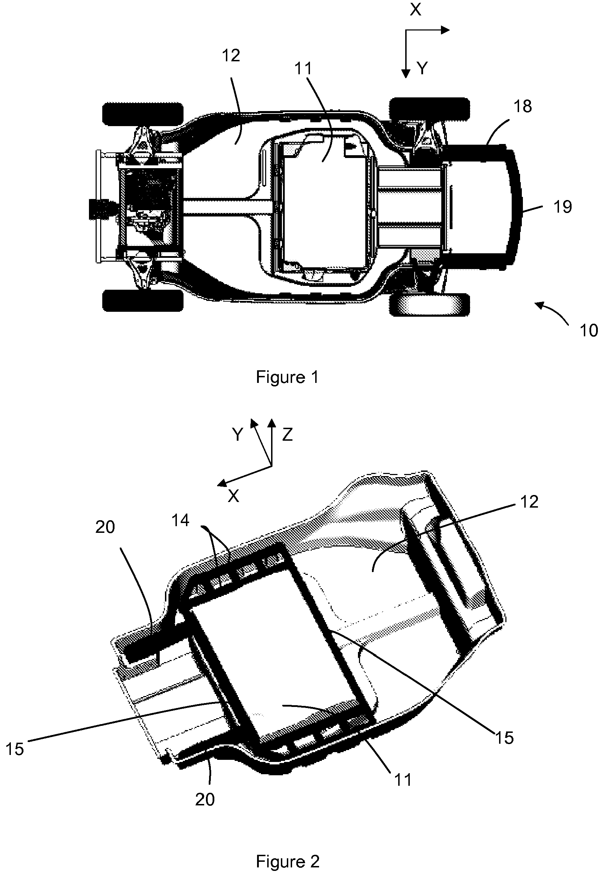

La suite de la description concerne, en relation aux figures 1 à 6, un véhicule automobile 10 à motorisation électrique ou hybride, qui comprend un agencement selon l'invention détaillé ci-dessous. Pour alimenter en énergie électrique le moteur électrique de traction, le véhicule 10 porte une batterie 11 d'alimentation de puissance. L'ensemble est configuré de sorte que la batterie 11 vienne se fixer de manière amovible par le dessous du véhicule 10, par exemple dans la partie centrale du véhicule 10, i.e. sensiblement à la moitié de la longueur du véhicule 10.

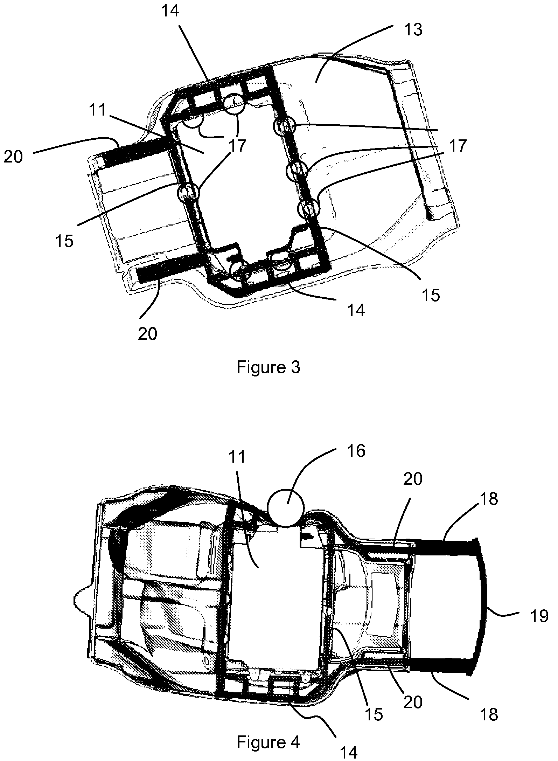

Le véhicule automobile 10 comprend un châssis de structure se composant de plusieurs parties. Le châssis comprend ainsi une première partie formée par des premiers éléments structurels de châssis constitués par au moins une coque autoporteuse 12, notamment réalisée en matériau composite à base de fibres de carbone, agencée au moins dans une partie centrale du soubassement du véhicule 10 suivant la direction longitudinale X du châssis. La direction transversale Y du véhicule correspond à la largeur du véhicule 10 et la direction verticale est repérée Z sur les figures. Dans le cas où la première partie de châssis comprend une pluralité de coques autoporteuses, celles-ci sont assemblées entre elles, notamment par collage, de sorte à former un ensemble d'un seul tenant et le plus rigide possible grâce, par exemple, à l'aménagement de corps creux tubulaires délimités par les coques entre elles. Notamment, les premiers éléments structurels peuvent comprendre, outre la coque 12, au moins une coque autoporteuse 13 supplémentaire. Une disposition possible consiste à prévoir que les coques 12 et 13 soient superposées, la coque 13 venant au-dessus de la coque 12. Il convient en outre de préciser que sur les figures 3 et 4, seule la batterie 11 est représentée tandis que la coque 12 n'est pas représentée sur ces vues de dessous de l'agencement.

Chacune des coques autoporteuses 12, 13 est notamment de type monolithique. Il convient d'entendre par le terme « monolithique » le fait que la coque comprend une seule paroi dense et n'est pas une structure sandwich à deux parois enserrant un matériau moins dense de type nid d'abeille.

Il va de soi que les premiers éléments structurels constitutifs de la première partie de châssis peuvent toutefois être de toute nature, par exemple sous la forme d'une ossature constituée de profilés de renfort.

La coque 12 comprend, à proximité de la moitié de sa longueur suivant la direction X et sur sensiblement toute sa largeur suivant la direction Y, un renfoncement dirigé verticalement vers le dessus et ayant une forme globalement complémentaire de la forme du boîtier de fermeture de la batterie 11, aussi appelé le carter. Le fond du renfoncement peut être muni éventuellement d'une ouverture (non représentée) dont les dimensions longitudinale et transversale sont inférieures aux dimensions longitudinale et transversale du boîtier de fermeture de la batterie 11. Le renfoncement est destiné à recevoir la batterie 11 par le dessous suivant Z, du côté de la face inférieure de la coque 12.

L'agencement que comprend le véhicule 10 comporte, en sus de la batterie 11, des éléments de renforcement configurés pour protéger la batterie 11 contre des efforts extérieurs appliqués au véhicule 10 selon la direction longitudinale X (choc frontal ou choc arrière) et/ou la direction transversale Y (choc latéral par un objet extérieur tel qu'un poteau) notamment en cas de choc. Selon une caractéristique essentielle, les éléments de renforcement, qui sont détaillés ci-dessous, sont indépendants de la batterie 11, notamment sont indépendants de son boîtier de fermeture.

Les éléments de renforcement comprennent avantageusement des profilés longitudinaux de structure 14 orientés selon la direction X et des profilés transversaux de structure 15 agencés selon la direction Y. De préférence, les profilés 14, 15 sont formés dans un matériau métallique tel qu'un acier, un extrudé aluminium (tel que Al 6005 ou Al6260) ou un alliage d'aluminium. L'utilisation de profilé ou extrudé aluminium permet d'une part d'intégrer des nervures et ainsi assurer une bonne rigidité en flexion, d'autre part de contenir la masse de l'ensemble. Des simulations ont montré qu'une épaisseur des profilés 14, 15 comprise entre 2 et 3,5mm donnait des résultats satisfaisants en termes de rigidité.

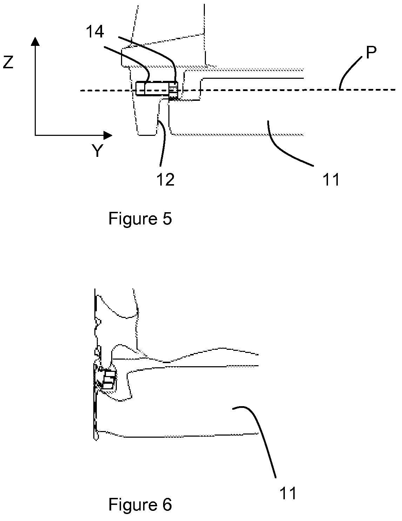

Les profilés 14, 15 sont assemblés deux à deux entre eux, notamment par mécano-soudage afin d'apporter une résistance recherchée aux chocs, pour former un cadre, par exemple de forme rectangulaire, encadrant la batterie 11 dans un plan P (figure 5) donné, notamment dans un plan horizontal (X, Y). L'ensemble est conçu de sorte à créer au moins un renforcement transversal continu du soubassement du châssis garantissant une intégrité optimale de la batterie 11 en cas de choc. Le cadre de protection ainsi constitué par les profilés 14, 15 autour de la batterie doit rester au maximum intègre afin de limiter les efforts appliqués sur le boîtier de fermeture de la batterie 11. Les profilés longitudinaux orientés selon la direction X sont destinés à absorber tout ou partie de l'énergie, par déformation ou rupture, en cas de choc latéral selon la direction Y. Dans la variante illustrée, sur chaque bord longitudinal de la batterie 11, les éléments de renforcement comprennent ainsi deux profilés longitudinaux 14 parallèles et directement adjacents, connectés sur leur longueur par une pluralité de profilés de jonction orientés selon la direction Y, améliorant l'absorption d'énergie en cas de choc latéral appliqué extérieurement au véhicule 10 au moins dans la direction Y, par un objet tel qu'un poteau 16 (figure 4).

Les éléments de renforcement, qui peuvent toutefois être de toute autre nature adaptée à la fonction recherchée, sont rapportés par le dessus selon Z sur les premiers éléments structurels, notamment sur la coque 12 au niveau de sa face supérieure. Il en résulte d'une part que les éléments de renforcement sont disposés entre les coques 12 et 13 suivant la direction verticale Z, d'autre part que l'ensemble est configuré de sorte que les premiers éléments structurels, au niveau de la coque 12, sont pris en sandwich entre la batterie 11 et les éléments de renforcement suivant la direction verticale Z. Il est possible de prévoir que les premiers éléments structurels soient pris en sandwich entre les éléments de renforcement et la batterie 11 suivant une direction différente de la direction verticale Z, notamment ayant une composante suivant la direction longitudinale X et/ou suivant la direction transversale Y.

Avantageusement, comme illustré sur les figures 2 et 5, les éléments de renforcement sont fixés sur la coque 12 des premiers éléments structurels, notamment par collage, de sorte que les éléments de renforcement assurent une rigidification de l'ensemble des premiers éléments structurels, notamment pour des cas de charges en flexion et/ou en torsion appliqués au châssis. Toutefois, d'autre moyen de fixation peuvent être envisagés tel que le vissage ou le soudage, suivant la nature des éléments de renforcement et des premiers éléments structurels.

L'agencement comprend des éléments de fixation 17 assurant une fixation amovible de la batterie 11 sur les éléments de renforcement. Notamment, les éléments de fixation 17 sont configurés pour exercer un effort de rapprochement de la batterie 11 en direction des éléments de renforcement en enserrant les premiers éléments structurels (ici la coque 12) entre la batterie 11 et les éléments de renforcement sous l'action dudit effort de rapprochement. Ces éléments de fixation 17 peuvent être de toute nature et en nombre quelconque. Dans la variante illustrée, sur chacun de ses bords longitudinaux orientés selon la direction X, la batterie 11 est fixée aux éléments de renforcement par deux éléments de fixation 17 mettant en oeuvre chacun une vis venant en prise directement dans l'un des deux profilés longitudinaux 14 adjacents. Sur son bord transversal arrière, la batterie 11 est fixée à un profilé transversal 15 par trois éléments de fixation 17 utilisant chacun une chape fixée au profilé 15 et dans laquelle une vis de serrage vient en prise. Sur son bord transversal avant enfin, la batterie 11 est fixée à un profilé transversal 15 par un seul élément de fixation 17. La coque 12 est munie d'ouvertures permettant le passage de ces vis.

Par ailleurs, le châssis du véhicule 10 comprend au moins une deuxième partie formée par des deuxièmes éléments structurels du châssis du véhicule 10, distincts des premiers éléments structurels détaillés ci-dessus. Les deuxièmes éléments structurels de châssis comprennent une ossature agencée au moins dans une partie avant du soubassement du véhicule 10 suivant la direction longitudinale X du véhicule 10 et se prolongeant au niveau de la partie centrale du soubassement par les éléments de renforcement. L'ossature comprend, dans la variante illustrée, au moins deux longerons avant 18 orientés selon la direction X, reliés entre eux à leurs extrémités avant par une traverse avant 19 (figure 4). Les éléments de renforcement comprennent au moins un profilé de liaison 20, ici au nombre de deux, s'étendant vers l'avant selon la direction X depuis le profilé transversal 15 avant. De manière générale, les éléments de renforcement sont solidaires des deuxièmes éléments structurels de manière amovible, notamment par vissage. Une disposition possible prévoit que chaque profilé de liaison 20 coopère par un montage mâle-femelle avec l'extrémité arrière d'un longeron avant 18, un vissage ultérieur maintenant le montage. Ainsi, les éléments de renforcement accueillent tout ou partie, ici seulement la partie inférieure, de la partie avant du châssis (ossature) du véhicule 10 servant à encaisser les chocs frontaux. Autrement dit, ce sont les éléments de renforcement 14, 15, 20 qui assurent la liaison mécanique entre les première et deuxième parties du châssis du véhicule 10.

Le montage de la batterie 11 sur le châssis du véhicule 10, comprend ainsi les étapes suivantes :
- fournir la batterie 11 et des éléments de renforcement 14, 15 indépendants de la batterie, notamment indépendants du boîtier de fermeture de la batterie, configurés pour protéger la batterie 11, à l'issue de l'étape suivante, contre des efforts extérieurs appliqués au véhicule selon la direction longitudinale X et/ou la direction transversale Y du véhicule 10 notamment en cas de choc,
- fixer la batterie 11 sur les éléments de renforcement 14, 15 en prenant en sandwich et en enserrant des premiers éléments structurels (coque 12) de châssis du véhicule entre la batterie 11 et les éléments de renforcement 14, 15.

Suite à un tel montage, les figures 4 et 6 illustrent la situation de l'agencement à la suite d'un choc latéral extérieur appliqué au véhicule 10 au moins dans la direction transversale Y par le poteau 16. Il ressort de ces figures que les éléments longitudinaux des éléments de renforcement, ici les profilés longitudinaux 14, ont absorbé la quasi-totalité de l'énergie résultant de ce choc latéral. La déformation des profilés longitudinaux 14, voire leur rupture, et/ou celles des profilés de jonction, ont permis de garantir une intégrité optimale de la batterie 11. L'ensemble des éléments de renforcement devra notamment être conçu de sorte à répondre au fait qu'une fissure du boîtier de fermeture de la batterie 11 est autorisée mais qu'elle ne doit pas pouvoir laisser passer un doigt « normalisé ».

## Revendications

1. Agencement pour un véhicule automobile (10) à motorisation électrique ou hybride, agencement comprenant une batterie (11) d'alimentation de puissance et des éléments de renforcement (14, 15) indépendants de la batterie (11) et configurés pour protéger la batterie (11) contre des efforts extérieurs appliqués au véhicule selon une direction longitudinale (X) et/ou une direction transversale (Y) du véhicule (10) notamment en cas de choc, **agencement caractérisé en ce qu**'il comprend des premiers éléments structurels (12, 13) d'un châssis du véhicule (10) et en ce que l'ensemble est configuré de sorte que les premiers éléments structurels (12, 13) sont pris en sandwich entre la batterie (11) et les éléments de renforcement (14, 15), notamment suivant une direction verticale (Z).

2. Agencement selon la revendication 1, **caractérisé en ce qu**'il comprend des éléments de fixation (17) assurant une fixation amovible de la batterie (11) sur les éléments de renforcement (14, 15).

3. Agencement selon la revendication 2, **caractérisé en ce que** les éléments de fixation (17) sont configurés pour exercer un effort de rapprochement de la batterie (11) en direction des éléments de renforcement (14, 15) en enserrant les premiers éléments structurels (12) entre la batterie (11) et les éléments de renforcement (14, 15) sous l'action dudit effort de rapprochement.

4. Agencement selon l'une des revendications 1 à 3, **caractérisé en ce que** les premiers éléments structurels (14, 15) de châssis sont constitués par au moins une coque autoporteuse (12, 13), notamment réalisée en matériau composite à base de fibres de carbone, agencée au moins dans une partie centrale d'un soubassement du véhicule suivant la direction longitudinale (X).

5. Agencement selon l'une des revendications 1 à 4, **caractérisé en ce qu**'il comprend des deuxièmes éléments structurels (18, 19) du châssis du véhicule (10), distincts des premiers éléments structurels (12, 13) et en ce que les éléments de renforcement (14, 15) sont solidaires des deuxièmes éléments structurels (18, 19), notamment par vissage.

6. Agencement selon la revendication 5, **caractérisé en ce que** les deuxièmes éléments structurels (18, 19) de châssis comprennent une ossature agencée au moins dans une partie avant du soubassement du véhicule (10) suivant la direction longitudinale (X) du véhicule et se prolongeant au niveau de la partie centrale du soubassement par les éléments de renforcement (14, 15).

7. Agencement selon l'une des revendications 1 à 6, **caractérisé en ce que** les éléments de renforcement (14, 15) sont rapportés par le dessus sur les premiers éléments structurels (12).

8. Agencement selon l'une des revendications 1 à 7, **caractérisé en ce que** les éléments de renforcement (14, 15) sont fixés aux premiers éléments structurels (12), notamment par collage, de sorte que les éléments de renforcement (14, 15) assurent une rigidification des premiers éléments structurels (12, 13), notamment pour des cas de charges en flexion et/ou en torsion appliquées au châssis.

9. Agencement selon l'une des revendications 1 à 8, **caractérisé en ce que** les éléments de renforcement (14, 15) comprennent des profilés longitudinaux (14) et des profilés transversaux (15), notamment en matériau métallique tel qu'un acier, en extrudé aluminium ou un alliage d'aluminium, et assemblés entre eux, notamment par mécano-soudage, pour former un cadre encadrant la batterie (11) dans un plan (P) donné, notamment dans un plan horizontal.

10. Véhicule automobile (10) à motorisation électrique ou hybride, **caractérisé en ce qu**'il comprend un agencement selon l'une quelconque des revendications précédentes.

11. Procédé de montage d'une batterie (11) d'alimentation de puissance d'un véhicule automobile à motorisation électrique ou hybride, sur un châssis du véhicule, comprenant les étapes suivantes :
- fournir la batterie (11) et des éléments de renforcement (14, 15) indépendants de la batterie (11), notamment indépendants d'un boîtier de fermeture de la batterie (11), configurés pour protéger la batterie (11), à l'issue de l'étape suivante, contre des efforts extérieurs appliqués au véhicule selon une direction longitudinale (X) et/ou une direction transversale (Y) du véhicule notamment en cas de choc, caractérisé un ce que le procédé comprend l'étape de
- fixer la batterie (11) sur les éléments de renforcement (14, 15) en prenant en sandwich et en enserrant des premiers éléments structurels (12) de châssis du véhicule entre la batterie (11) et les éléments de renforcement (14, 15).

## Patentansprüche

1. Anordnung für ein Kraftfahrzeug (10) mit Elektro-oder Hybridmotorisierung, wobei die Anordnung eine Stromversorgungsbatterie (11) und Verstärkungselemente (14, 15) aufweist, die von der Batterie (11) unabhängig sind und konfiguriert sind, um die Batterie (11) gegen äußere Spannungen zu schützen, die auf das Fahrzeug in einer Längsrichtung (X) und/oder einer Querrichtung (Y) des Fahrzeugs (10) einwirken, insbesondere im Falle eines Aufpralls, wobei die Anordnung **dadurch gekennzeichnet ist, dass** sie erste Strukturelemente (12, 13) eines Fahrgestells des Fahrzeugs (10) aufweist und dass die Baugruppe derart konfiguriert ist, dass die ersten Strukturelemente (12, 13) zwischen der Batterie (11) und den Verstärkungselementen (14, 15), insbesondere entlang einer vertikalen Richtung (Z), sandwichartig eingeschlossen sind.

2. Anordnung nach Anspruch 1, **dadurch gekennzeichnet, dass** sie Befestigungselemente (17) aufweist, die eine abnehmbare Befestigung der Batterie (11) auf den Verstärkungselementen (14, 15) gewährleisten.

3. Anordnung nach Anspruch 2, **dadurch gekennzeichnet, dass** die Befestigungselemente (17) konfiguriert sind, um eine Kraft zum Annähern der Batterie (11) in Richtung der Verstärkungselemente (14, 15) auszuüben, indem die ersten Strukturelemente (12) zwischen der Batterie (11) und den Verstärkungselementen (14, 15) unter der Wirkung der Kraft zum Annähern festgeklemmt werden.

4. Anordnung nach einem der Ansprüche 1 bis 3, **dadurch gekennzeichnet, dass** die ersten Strukturelemente (14, 15) des Fahrgestells durch mindestens ein selbsttragendes Gehäuse (12, 13) gebildet sind, das insbesondere aus Kohlefaserverbundstoff hergestellt ist, das mindestens in einem mittleren Teil eines Unterbodens des Fahrzeugs entlang der Längsrichtung (X) angeordnet ist.

5. Anordnung nach einem der Ansprüche 1 bis 4, **dadurch gekennzeichnet, dass** sie zweite Strukturelemente (18, 19) des Fahrgestells des Fahrzeugs (10) aufweist, die sich von den ersten Strukturelementen (12, 13) unterscheiden, und dass die Verstärkungselemente (14, 15) mit den zweiten Strukturelementen (18, 19) insbesondere durch Verschrauben fest verbunden sind.

6. Anordnung nach Anspruch 5, **dadurch gekennzeichnet, dass** die zweiten Strukturelemente (18, 19) des Fahrgestells einen Tragrahmen aufweisen, der mindestens in einem vorderen Teil des Unterbodens des Fahrzeugs (10) entlang der Längsrichtung (X) des Fahrzeugs angeordnet ist und sich auf der Ebene des mittleren Teils des Unterbodens durch die Verstärkungselemente (14, 15) fortsetzt.

7. Anordnung nach einem der Ansprüche 1 bis 6, **dadurch gekennzeichnet, dass** die Verstärkungselemente (14, 15) von oben auf den ersten Strukturelementen (12) angebracht sind.

8. Anordnung nach einem der Ansprüche 1 bis 7, **dadurch gekennzeichnet, dass** die Verstärkungselemente (14, 15) an den ersten Strukturelementen (12), insbesondere durch Kleben, derart befestigt sind, dass die Verstärkungselemente (14, 15) eine Versteifung der ersten Strukturelemente (12, 13), insbesondere für Fälle von Biege- und/oder Torsionslasten, die auf das Fahrgestell aufgebracht werden, gewährleisten.

9. Anordnung nach einem der Ansprüche 1 bis 8, **dadurch gekennzeichnet, dass** die Verstärkungselemente (14, 15) Längsprofile (14) und Querprofile (15) aufweisen, insbesondere aus einem metallischen Material wie einem Stahl, aus Aluminiumprofilen oder einer Aluminiumlegierung und die miteinander verbunden sind, insbesondere durch Mechano-Schweißen, um einen Rahmen zu bilden, der die Batterie (11) in einer gegebenen Ebene (P), insbesondere in einer horizontalen Ebene, einrahmt.

10. Kraftfahrzeug (10) mit Elektro- oder Hybridmotorisierung, **dadurch gekennzeichnet, dass** es eine Anordnung nach einem der vorhergehenden Ansprüche aufweist.

11. Verfahren zur Montage einer Stromversorgungsbatterie (11) eines Kraftfahrzeugs mit Elektro- oder Hybridmotorisierung auf ein Fahrgestell des Fahrzeugs, umfassend die folgenden Schritte:
- Bereitstellen der Batterie (11) und der Verstärkungselemente (14, 15), die von der Batterie (11) unabhängig sind, die insbesondere von einem Gehäuse zum Verschließen der Batterie (11) unabhängig sind, die konfiguriert sind, um die Batterie (11) nach Abschluss des folgenden Schrittes gegen äußere Spannungen zu schützen, die auf das Fahrzeug in einer Längsrichtung (X) und/oder einer Querrichtung (Y) des Fahrzeugs einwirken, insbesondere im Falle eines Aufpralls,
**dadurch gekennzeichnet, dass** das Verfahren den folgenden Schritt aufweist:
- Befestigen der Batterie (11) auf den Verstärkungselementen (14, 15), indem erste Strukturelemente (12) des Fahrgestells des Fahrzeugs zwischen der Batterie (11) und den Verstärkungselementen (14, 15) sandwichartig angeordnet und festgeklemmt werden.

## Claims

1. Arrangement for a motor vehicle (10) with an electric or hybrid motor that has a power supply battery (11) and reinforcing elements (14, 15) that are independent of the battery (11) that are designed to protect the battery (11) against external stresses applied to the vehicle in a longitudinal direction (X) and/or a transverse direction (Y) of the vehicle (10), in particular in the event of impact, **said arrangement being characterized in that** it includes first structural elements (12, 13) of a chassis of the vehicle (10) and **in that** the unit is designed such that the first structural elements (12, 13) are sandwiched between the battery (11) and the reinforcing elements (14, 15), in particular in a vertical direction (Z).

2. Arrangement according to Claim 1, **characterized in that** it includes attachment elements (17) for removably attaching the battery (11) to the reinforcing elements (14, 15).

3. Arrangement according to Claim 2, **characterized in that** the attachment elements (17) are designed to exert an approaching force moving the battery (11) towards the reinforcing elements (14, 15) by clamping the first structural elements (12) between the battery (11) and the reinforcing elements (14, 15) under the action of said approaching force.

4. Arrangement according to one of Claims 1 to 3, **characterized in that** the first structural chassis elements (14, 15) are at least one unitized body (12, 13), in particular made of a carbon-fiber-based composite material, arranged at least in one central portion of an underframe of the vehicle in the longitudinal direction (X).

5. Arrangement according to one of Claims 1 to 4, **characterized in that** it includes second structural elements (18, 19) of the chassis of the vehicle (10) that are distinct from the first structural elements (12, 13), and **in that** the reinforcing elements (14, 15) are rigidly connected to the second structural elements (18, 19), in particular by screws.

6. Arrangement according to Claim 5, **characterized in that** the second structural chassis elements (18, 19) include a frame arranged at least in one front portion of the underframe of the vehicle (10) in the longitudinal direction (X) of the vehicle, reinforcing elements (14, 15) extending therefrom next to the central portion of the underframe.

7. Arrangement according to one of Claims 1 to 6, **characterized in that** the reinforcing elements (14, 15) are positioned from above onto the first structural elements (12).

8. Arrangement according to one of Claims 1 to 7, **characterized in that** the reinforcing elements (14, 15) are attached to the first structural elements (12), in particular by gluing, such that the reinforcing elements (14, 15) stiffen the first structural elements (12, 13), in particular in the presence of flexural and/or torsional loads applied to the chassis.

9. Arrangement according to one of Claims 1 to 8, **characterized in that** the reinforcing elements (14, 15) include longitudinal sections (14) and transverse sections (15), in particular made of a metallic material such as steel, extruded aluminum or an aluminum alloy, that are assembled together, in particular by mechanical welding, to form a frame surrounding the battery (11) in a given plane (P), in particular in a horizontal plane.

10. Motor vehicle (10) with an electric or hybrid motor, **characterized in that** it includes an arrangement according to any one of the preceding claims.

11. Method for mounting a power supply battery (11) of a motor vehicle with an electric or hybrid motor on a chassis of the vehicle, including the following steps:
- providing the battery (11) and the reinforcing elements (14, 15) that are independent of the battery (11), which are in particular independent of an enclosure of the battery (11) and which are designed to protect the battery (11), on completion of the following step, against external stresses applied to the vehicle in a longitudinal direction (X) and/or a transverse direction (Y) of the vehicle, in particular in the event of impact,
**characterized in that** the method comprises the step of
- attaching the battery (11) to the reinforcing elements (14, 15) by sandwiching and clamping the first structural chassis elements (12) of the vehicle between the battery (11) and the reinforcing elements (14, 15).
